# EUROPEAN PATENT APPLICATION

(11) **EP 4 563 349 A1**
(43) Date of publication of application: **04.06.2025**
(21) Application number: 23860632.1
(22) Date of filing: 29.06.2023
(51) Int. Cl.: B32B 37/10, B32B 37/00, B32B 27/08, B32B 27/28, B32B 27/34, B32B 37/15

(54) **METHOD FOR MANUFACTURING COMPOSITE FILM AND COMPOSITE FILM**

(30) Priority: 02.09.2022 KR 20220111248
(71) Applicant: SK microworks Co., Ltd., Chungcheongbuk-do 27818 (KR)
(72) Inventor: JANG, Kwangho, Suwon-si, Gyeonggi-do 16338 (KR); HAN, Kweonhyung, Suwon-si, Gyeonggi-do 16338 (KR)
(74) Representative: BCKIP Part mbB
(86) International application number: PCT/KR2023/009114
(87) International publication number: WO 2024/048949

(57) **Abstract**

Embodiments provide: a method for manufacturing a composite film, the method comprising a laminating operation of extruding a raw material including a polyether block amide copolymer into a sheet form and coming the sheet into contact with a carrier film to obtain a laminate, and a winding operation of winding the laminate, to thereby complete the manufacture of a composite film comprising the laminate, wherein the laminating operation comprises coming the sheet into contact with the carrier film within 30 seconds from the start of the extrusion; and a composition film which is not separated even after 200,000 cycles of dynamic bending tests at a temperature of -40 °C with a curvature radius of 1.5 mm and a bending speed of 1 second per 1 time in accordance with IEC 62715-6-1 standard.

## Description

### BACKGROUND

### 1. Field

Embodiments relate to a method for manufacturing a composite film and a composite film.

### 2. Description of Related Art

Flexible display devices may be used in a folded or curved form, allowing them to be utilized in a variety of applications. Flexible displays are categorized into rollable displays that can be rolled up, foldable displays that can be folded, and stretchable displays that can be resized, depending on how much they bend.

Among these, foldable display devices are gaining traction as a useful display technology because they are easy to carry when folded and can be unfolded to create a large screen area.

The cover window that protects the surface of these foldable display devices has primarily adopted transparent polyimide (TPI) as the material. However, this TPI is vulnerable to repeated impact and may be deformed. To enhance the overall quality of foldable display devices, it is necessary to develop additional bonding materials, bonding methods, and devices that can compensate for the shortcomings of TPI.

The foregoing background technology is technical information that the inventor had in the inventor's possession to derive the embodiments, or acquired in the process of deriving them, and does not necessarily constitute publicly available knowledge that was available to the general public prior to the filing of the invention.

Relevant prior technologies include "Protective Film for Foldable Display and Foldable Display Device Comprising Same" disclosed in Korean Public Patent Application No. 10-2021-0052070; "Optical Transparent Composite Film for Foldable Display and Method for Manufacturing the Same" disclosed in Korean Public Patent Application No. 10-2022-0082363.

### SUMMARY

An object of the embodiments is to provide a method for manufacturing a composite film, a manufacturing apparatus, and a composite film manufactured accordingly that is suitable for a foldable display device or the like, and that ensures good durability even after repeated folding.

To accomplish the above objectives, a method for manufacturing a composite film according to an embodiment, includes
a laminating operation of extruding a raw material including a polyether blockamide copolymer into a sheet, and laminating the sheet with a carrier film to obtain a laminate; and
a winding operation of winding the laminates and thus, producing a composite film comprising the laminates.

The laminating operation brings the sheet into contact with the carrier film within 30 seconds of the start of the extrusion.

The composite film may maintain adhesion not to occur the delamination after 200,000 cycles of dynamic bending tests at a temperature of -40°C, with a curvature radius of 1.5 mm and a bending speed of 1 second per 1 time, in accordance with IEC 62715-6-1 standards.

In one embodiment, the carrier film may include a polyimide-based resin.

In one embodiment, the laminating operation may include a rolling process in which the laminate is passed between a plurality of rollers.

In one embodiment, the method may further include a protective operation of disposing a protective film on the laminate after the laminating operation.

In one embodiment, the laminating operation may include a process for the sheet of being extruded being conveyed or dropped in a direction toward the ground and proceeding to abut on the carrier film.

To accomplish the above objectives, a composite film according to an embodiment, a sheet including a polyether block amide copolymer; and a carrier film disposed on the sheet; and
the composite film may maintain adhesion not to occur the delamination after 200,000 cycles of dynamic bending tests at a temperature of -40°C, with a radius of curvature of 1.5 mm and 1 cycle per second, in accordance with IEC 62715-6-1 standards.

In one embodiment, one side of the sheet and one side of the carrier film may directly contact each other.

In one embodiment, the carrier film may be a film including a polyimide-based resin.

In one embodiment, the sheet has a thickness of 20 µm or more and 500 µm or less,
a thickness of the carrier film may be more than 20 µm and 1000 µm or less.

In one embodiment, the polyether block amide copolymer includes 10% by weight or more of amide blocks relative to the total,

The imidization rate of the polyimide-based resin may be 90% or more.

### BRIEF DESCRIPTION OF THE DRAWINGS

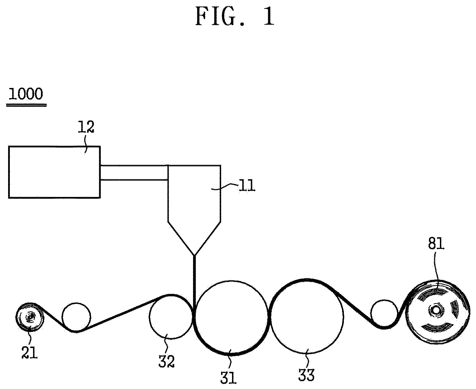

FIG. 1 is a schematic diagram illustrating an example composite film manufacturing apparatus, according to an embodiment.

### DETAILED DESCRIPTION

The following detailed description is provided with reference to the accompanying drawings for one or more embodiments, so that a person of ordinary skill in the art to which the invention pertains can easily implement the invention. However, the embodiments may be implemented in various different forms and are not limited to the embodiments described herein. Identical reference numerals have been used throughout the specification for similar parts.

In this specification, when a configuration is said to "include or comprise" another configuration, it means that, unless specifically stated otherwise, it does not exclude other configurations and may further include additional configurations.

In this specification, when a configuration is said to be "connected" to another configuration, it includes not only the case where they are "directly connected" but also the case where they are connected through another configuration in between.

In this specification, when it is stated that B is located on A, it means that B is positioned directly on A or that B is positioned on A with another layer in between. It is not limited to the interpretation that B is directly in contact with the surface of A.

In this specification, the term "combination thereof" included in a Markush-type expression refers to one or more mixtures or combinations selected from a group of elements described in the Markush-type expression, meaning it includes one or more selected from the group of elements.

In this specification, the expression "A and/or B" means "A, B, or A and B."

In this specification, terms such as "First," "Second," or "A," "B" are used to distinguish between the same terms, unless otherwise specifically stated.

In this specification, singular expressions, unless specifically stated otherwise, are interpreted to include both the singular and plural forms as contextually appropriate.

### Method for manufacturing composite film

To achieve the above objectives, a method for manufacturing a composite film according to the embodiment comprises:
a laminating operation of extruding a raw material comprising a polyether block amide copolymer into a sheet, and laminating the sheet with a carrier film to obtain a laminate; and
a winding operation of winding the laminates; and thus, producing a composite film comprising the laminate.

The laminating operation brings the sheet into contact with the carrier film within 30 seconds of the start of the extrusion.

The composite film may maintain adhesion not to occur the delamination after 200,000 cycles of dynamic bending tests at a temperature of -40°C, with a radius of curvature of 1.5 mm and 1 cycle per second, in accordance with IEC 62715-6-1 standards.

The polyether block amide copolymer in the laminating operation may comprise a rigid region and a flexible region within the polymer chain. The rigid region may be represented as a semi-crystalline region. The flexible region may be represented as an amorphous region.

The polyether block amide copolymer comprises both a polyamide region, which is a rigid region, and a polyether region, which is a flexible region, so that the composite film may have relatively flexible characteristics and viscoelastic properties.

The polyether block amide copolymer may be a combination of a polyamide comprising two or more intramolecular carboxyl groups and a polyether comprising two or more intramolecular hydroxyl groups.

The polyether block amide copolymer may be a condensate polymer of a polyether block comprising reactive end groups and a polyamide block comprising reactive end groups.

The polyether block amide copolymer may be a condensation polymer comprising a polyamide block comprising dicarboxyl terminal groups and a polyoxyalkylene block comprising diamine terminal groups. The polyoxyalkylene block may be obtained by cyanoethylation and hydrogenation of an aliphatic α,ω-dihydroxylated polyoxyalkylene block known as polyetherdiol.

The polyether block amide copolymer may be a condensation polymer comprising a polyamide block comprising dicarboxyl terminal groups and a polyetherdiol block. In such cases, the polyether block amide is a polyether ester amide.

Exemplarily, a polyamide block comprising a dicarboxyl terminals may comprise a condensation polymerization of a polyamide precursor in the presence of a chain-limiting dicarboxylic acid. A polyamide block comprising a diamine terminals may comprise a condensation polymerization of a polyamide precursor in the presence of a chain-limiting diamine.

Exemplarily, a polyamide block comprising a dicarboxylic terminals may comprise a condensation polymer of dicarboxylic acid and diamine, α,ω-aminocarboxylic acid, or lactam in the presence of a chain-limiting dicarboxylic acid. As the polyamide block, polyamide 12 or polyamide 6 may be applied.

The polyether block amide copolymer may comprise blocks having a randomly distributed unit structure. Exemplarily, the following three types of polyamide blocks may be used.

As the first type, the polyamide block may comprise a condensation polymer of a carboxylic acid and an aliphatic or aryl aliphatic diamine. The carboxylic acid may have from 4 to 20 carbon atoms, or may have from 6 to 18 carbon atoms. The aliphatic or aryl aliphatic diamine may have from 2 to 20 carbon atoms, and may have from 6 to 14 carbon atoms.

The dicarboxylic acid may be any one selected from, for example, 1,4-cyclohexanedicarboxylic acid, 1,2-cyclohexyldicarboxylic acid, 1,4-butanedioic acid, adipic acid, azelaic acid, suberic acid, sebacic acid, 1,12-dodecanedicarboxylic acid, 1,14-tetradecanedicarboxylic acid, 1,18-octadecanedicarboxylic acid, terephthalic acid, isophthalic acid, haphthalenedicarboxylic acid, dimerized fatty acids, and the like.

The diamine may be, for example, 1,5-tetramethylenediamine, 1,6-hexamethylenediamine, 1,10-decamethylenediamine, 1,12-dodecamethylenediamine, trimethyl-1,6-hexamethylenediamine, 2-methyl-1,5-pentamethylenediamine, the isomers of bis(3-methyl-4-aminocyclohexyl)methan (BMACM), 2,2-bis(3-methyl-4-aminocyclohexyl)propane (BMACP), bis(para-aminocyclohexyl)methane (PACM), isophoronediamine (IPD), 2,6-bis(aminomethyl)norbornane (BAMN), piperazine (Pip), meta-xylylenediamine (MXD), and para-xylylenediamine (PXD).

The first type of polyamide block may comprise PA 412, PA 414, PA 418, PA 610, PA 612, PA 614, PA 618, PA 912, PA 1010, PA 1012, PA 1014, PA 1018, MXD6, PXD6, MXD10, or PXD10.

The second type of the polyamide block may comprise a condensation polymer of one or more α, ω-aminocarboxylic acids and/or one or more lactams having 6 to 12 carbon atoms, in the presence of a dicarboxylic acid or diamine having 4 to 12 carbon atoms. Examples of the lactams comprise caprolactam, oenantholactam, laurylactam, and the like. Examples of the α,ω-aminocarboxylic acids comprise. aminocaproic acid, 7-aminoheptanoic acid, 11-aminoundecanoic acid, 12-aminododecanoic acids, and the like.

The second type of the polyamide block may comprise polyamide 11, polyamide 12, or polyamide 6.

A third type of the polyamide block may comprise a condensation polymer of one or more α,ω-aminocarboxylic acids (or one or more lactams), one or more diamines, and one or more dicarboxylic acids. In such cases, the polyamide block may be prepared by condensation polymerization of the following diamine, dicarboxylic acid and comonomer (or comonomers.)

The diamine may be, for example, a linear aliphatic diamine, an aromatic diamine, a diamine having X carbon atoms, or the like. The dicarboxylic acid e.g., a dicarboxylic acid, an acid having Y carbon atoms, etc. The comonomer or comonomers {Z} may be selected from a mixture comprising a lactam having Z carbon atoms, an α,ω-aminocarboxylic acid, and a mixture comprising substantially equal molar amounts of at least one diamine having X1 carbon atoms and at least one dicarboxylic acid having Y1 carbon atoms. However, wherein (X1, Y1) is different from (X, Y).

The comonomer or comonomers {Z} may comprise 50 wt% or less, 20 wt% or less, or 10 wt% or less, based on the total of the combined polyamide precursor monomers.

The condensation reaction according to the third type may proceed in the presence of a chain limiting agent selected from dicarboxylic acids. A dicarboxylic acid having Y carbon atoms may be used as the chain limiting agent, wherein the dicarboxylic acid may be introduced in a stoichiometric excess relative to the one or more diamines.

As an alternative form of the third type, the polyamide block may optionally comprise two or more α,ω-aminocarboxylic acids having from 6 to 12 carbon atoms, or two or more lactams, or a condensation polymer of a lactam and an aminocarboxylic acid having different numbers of carbon atoms, in the presence of a chain limiting agent.

The aliphatic α,ω-aminocarboxylic acid may be, for example, aminocaproic acid, 7-aminoheptanoic acid, 11-aminoundecanoic acid, 12-aminododecanoic acid, and the like.

The lactam may be, for example, caprolactam, onantolactam, laurylactam, or the like.

The aliphatic diamine may be, for example, hexamethylenediamine, dodecamethylenediamine, trimethylhexamethylenediamine, or trimethylhexamethylenediamine.

The alicyclic diacid may be, for example, 1,4-cyclohexanedicarboxylic acid.

The aliphatic diacids may be, for example, butanedioic acid, adipic acid, azelaic acid, suberic acid, sebacic acid, dodecanedicarboxylic acid, dimerized fatty acids (dimerization rate of 98% or more; hydrogenated; commercially available under the trade name Pripol by Uniqema or under the trade name Empol by Henkel), polyoxyalkylene-α, ω-diacids, and the like.

The aromatic diacid may be, for example, terephthalic acid, isophthalic acid, or the like.

The alicyclic diamines may be, for example, isomers of bis(3-methyl-4-aminocyclohexyl)methane (BMACM) and 2,2-bis(3-methyl-4-aminocyclohexyl)propane (BMACP), bis(para-aminocyclohexyl)methane (PACM), and the like.

Other diamines may be, for example, isophorondiamine (IPD), 2,6-bis(aminomethyl)novonane (BAMN), piperazine, and the like. Examples of aryl aliphatic diamines comprise, but are not limited to, meta-xylylenediamine (MXD) and para-xylenediamine (PXD).

Examples of the third type of polyamide block comprise PA 66/6, PA 66/610/11/12, and the like. In the PA 66/6, the 66 represents a hexamethylenediamine unit condensed with adipic acid, and the 6 represents a unit introduced by condensation of caprolactam.

In PA 66/610/11/12, wherein the 66 represents a unit of hexamethylenediamine condensed with adipic acid, the 610 represents a unit of hexamethylenediamine with sebacic acid, the 11 represents a unit introduced by condensation of aminoundecanoic acid, and the 12 represents a unit introduced by condensation of laurylactam.

The polyether block may comprise, for example, 1 or more selected from the group of polyalkylene ether polyols, in particular polyalkylene etherdiols, such as polyethylene glycol (PEG), polypropylene glycol (PPG), polytrimethylene glycol (PO3G), polytetramethylene glycol (PTMG) and mixtures thereof or copolymers thereof. The polyether block may comprise a polyoxyalkylene array comprising an NH₂ terminals, wherein the array may be introduced by cyanoacetylation of an aliphatic α,ω-dihydroxy polyoxyalkylene array known as a polyetherdiol. Specifically, zepamine (e.g., Zepamine^{®} D400, D2000, ED2003, or XTJ542 from Huntsman) may be used.

One or more of the polyether block may preferably comprise one or more polyethers selected from, for example, polyalkylene ether polyols such as PEG, PPG, PO3G, PTMG, polyethers comprising NH₂ at the terminals and containing a polyoxyalkylene arrangement, copolymers (ether copolymers) in which they are randomly and/or block-arranged, and mixtures thereof.

The polyether block may be produced from polyethylene glycol, any one of polypropylene glycol, polytetramethylene glycol, and combinations thereof. The polyether block may be copolymerized with a polyamide block comprising carboxyl terminals to form a polyether block amide. The polyether block may be aminated to convert to a polyetherdiamine, which may then be condensed with a polyamide block comprising carboxyl terminals to form a polyether block amide. The polyether block may be blended with a polyamide precursor and a chain limiting agent to form a polyether block amide comprising statistically distributed units.

The polyether is exemplarily polyethylene glycol (PEG), polypropylene glycol (PPG) or polytetramethylene glycol (PTMG) and the like. Polytetramethylene glycol is also known as polytetrahydrofuran (PTHF). A polyether block may be introduced into the polyether block amide chain from a diol or diamine form, wherein the polyether block is referred to as a PEG block, PPG block, or PTMG block, respectively.

The polyamide block may have a number-average molecular weight of 300 g/mol to 15,000 g/mol, or 600 g/mol to 5,000 g/mol. The polyether block may have a number-average molecular weight of 100 g/mol to 6,000 g/mol, or 200 g/mol to 3,000 g/mol.

The ratio of the number-average molecular weight of the polyamide block and that of the polyether block in the polyether block amide copolymer may be from 1: 0.25 to 1, and the number-average molecular weight of the polyamide block and that of the polyether block at the copolymer may be 1000/1000, 1300/650, 2000/1000, 2600/650, or 4000/1000, respectively.

The content of the polyether block relative to the total weight of the polyether block amide copolymer may be from 10 wt% to 80 wt%, from 40 wt% to 80 wt%, or from 60 wt% to 80 wt%.

The content of the polyamide blocks relative to the total weight of the polyether block amide copolymer may be 10 wt% or more and 68 wt% or less, 15 wt% or more and 60 wt% or less, or 20 wt% or more and 50 wt% or less. The content may be interpreted as being statistically distributed within the polymer chain. By having such a polyamide block content, a stable bond may be achieved. Outside of the above polyamide block content ranges, delamination of the sheet-carrier film may occur during dynamic bending evaluation of the composite film.

Exemplary polyether block amide copolymers comprise, but are not limited to, Pebax^{®}, Pebax^{®} Rnew^{®} series from ARKEMA FRANCE, and VESTAMID^{®} E series from EVONIK.

The extrusion temperature of the laminating operation may be at least 100°C or more, may be 120°C or more, may be 140°C or more, may be 160°C or more, or may be 180°C or more. The temperature of the sheet may be 290°C or less, 260°C or less, or 230°C or less. A sheet that satisfies this temperature range may be reliably bonded to a carrier film comprising a polyimide-based resin.

The laminating operation may comprise an extrusion process, wherein the raw material comprising the polyether block amide copolymer is extruded and formed into a sheet.

The extrusion temperature of the extrusion process corresponds to the exit temperature of the extruded part when extruded and may be substantially the same as the temperature of the sheet in the laminating operation or may have a predetermined temperature difference.

The starting point of extrusion of the extrusion process may refer to the point at which the melt of the raw material is extruded in sheet form though the outlet of the extruder. At the starting point of extrusion, the sheet may be exposed to a conventional gaseous atmosphere in film manufacturing or may be exposed to the ambient air.

For example, the extrusion process may be configured so that the sheet is extruded from the extruder to be conveyed or dropped in a direction facing the ground (perpendicular to the ground). The sheet being conveyed or dropped may then be brought into contact with the carrier film being conveyed by one or more rollers, or may be brought into contact with the carrier film and formed into a laminate while the rolling process described below is carried out.

The extrusion process may bring the sheet into contact with the carrier film within 30 seconds from the start of the extrusion to obtain a laminate, or may bring the sheet into contact with the carrier film within 20 seconds, within 10 seconds, within 5 seconds, or within 3 seconds, to obtain a laminate. By contacting the sheet with the carrier film within such a short period of time, the interface between the sheet and the carrier film may be induced to be partly or mostly chemically bonded, rather than simply physically bonded, and may have a bonding force that cannot be seen by physical bonding. Furthermore, depending on the material, co-extrusion, where the bonding occurs within the extrusion equipment- may not be feasible. In the present embodiment, an even greater bonding strength may be expected compared to co-extrusion.

The laminate after the laminating operation may have a sheet disposed on a carrier film, or a structure of a carrier film disposed on a sheet.

The laminating operation may comprise rolling process that the laminate passes between multiple rollers.

The multiple rollers in the rolling process may comprise at least two or three or more, with no particular limitation as long as sufficient rolling is achieved.

The multiple rollers of the rolling process may comprise, for example, a first roller, which transports the laminate to a subsequent processing, and second and third rollers, disposed adjacent to the first roller, which apply pressure to the laminate or to the sheet and carrier film to assist in the rolling process. The second roller may transport the carrier film and assist in bonding between the sheet carrier film and the laminate. Further, the second roller may apply pressure to the laminate or to the sheet and carrier film to assist in rolling. The third roller may also apply pressure to the laminate and assist in rolling, and may assist in transporting the laminate.

During the rolling process, the surface roughness of the sheet may be controlled. For example, the surface roughness of one side of the sheet may be controlled by the roughness of a carrier film in direct contact with the one side of the sheet. It may also be controlled by the surface roughness of rollers that may be in direct contact with the other side of the sheet.

By the rolling process, the laminate may be pressurized and processed to a uniform thickness.

The carrier film of the laminating operation may comprise a polyimide-based resin. The polyimide-based resin may be obtained by proceeding with an imidization rate of the polyimide precursor of 90% or more. The imidization rate may be 98% or more, 99.9% or more, or 99.999% or less.

The carrier film may further comprise a polyethylene terephthalate (PET) layer. For example, the carrier film may comprise a polyethylene terephthalate layer on a side opposite to the side that is bonded to the sheet.

A thickness of the sheet may be 20 µm or more and 500 µm or less, 25 µm or more and 200 µm or less, or 30 µm or more and 150 µm or less.

A thickness of the carrier film may be 20 µm or more and 1000 µm or less, 25 µm or more and 500 µm or less, or 30 µm or more and 200 µm or less.

By having such thickness, the sheet and carrier film may ensure that good quality is maintained in the manufacture of laminates and composite films.

The Ra roughness of one side of the carrier film may be 0.5 µm or less, 0.2 µm or less, 0.0001 µm or more, or 0.001 µm or more. The carrier film with such roughness may control the surface roughness of the sheet to have a lower haze value.

The method of manufacturing the composite film may comprise a measuring process to measure the thickness of the laminate after the laminating operation.

The method of manufacturing the composite film may further comprise a protective operation of disposing a protective film on the laminate in which the laminating operation has been performed.

The protective operation may comprise imposing a protective film on the sheet of laminate.

The protective film may comprise polyethylene, polyethylene terephthalate, or the like.

The protective operation may involve placing the protective film in contact with the opposite side of the sheet of laminate which is not in contact with the carrier.

The surface roughness Ra of one side of the protective film may be 0.5 µm or less, 0.2 µm or less, 0.0001 µm or more, or 0.001 µm or more. A protective film having such a roughness may control the surface roughness of the sheet to have a lower haze value.

The method of manufacturing the composite film may further comprise an operation of removing the carrier film from the laminate, as desired. It may further comprise an operation of removing a protective film from the laminate as required.

The method of manufacturing the composite film may further comprise a trimming process to trim the width of the laminate after the protective operation.

The winding operation may be performed by winding the laminate through a separate end roller or the like, and the composite film may be cut after proper winding to provide a stable transportable composite film.

### Manufacturing Apparatus for Composite Film 1000

To accomplish the above objectives, a manufacturing apparatus for a composite film according to an embodiment, comprises
a storage part 12 in which raw material comprising a polyether block amide copolymer is stored;
an extrusion part 11 comprising an inner space connected to the storage part and in which melting of raw material obtained from the storage part takes place, and an outlet connected to the inner space and in which the raw material is extruded into sheets;
a rolling part for rolling a sheet that is extruded from the extrusion part; and
a first feeding part 21 for feeding a carrier film to the rolling part,
wherein the rolling part rolls the sheet and the carrier film to form a laminate.

It comprises end roller 81 for final winding of the laminate.

The temperature of the sheet may be at least 100°C or more.

The inner space of the extrusion part 11 may store the melt of the raw material.

The outlet of the extrusion part 11 may have a straight opening so that the raw material is extruded into a sheet shape.

The extrusion part 11 may be controlled so that the temperature of the outlet is predetermined. At the time of starting extrusion of the extrusion part, the temperature of the outlet may be 100°C or more, may be 120°C or more. It may be 140°C or more and 290°C or less, may be 150°C or more and 260°C or less, or may be 180°C or more and 230°C or less. By maintaining such a temperature, a stable surface bond may be achieved with the carrier film comprising the polyimide-based resin, which is the object in contact with the sheet.

The rolling part may be arranged to receive the sheet within 30 seconds of the start of extrusion of the sheet, and may be arranged to receive the sheet within 20 seconds, within 10 seconds, within 5 seconds, or within 3 seconds.

The rolling part may comprise at least two or more, or three or more rollers, and the number of rollers is not limited as long as sufficient rolling may be achieved.

The plurality of rollers of the rolling part may comprise, for example, a first roller 31 and a second roller 32. The first roller may be in partial contact with the laminate to assist its transfer to a subsequent process. The second roller may be disposed adjacent to the first roller, transporting the carrier film and assisting in laminating between the sheet and carrier film. Further, the second roller may apply pressure to the laminate or the sheet and carrier film to assist in rolling. The plurality of rollers may further comprise a third roller 33. The third roller may be disposed adjacent to the first roller, abutting the first roller, and may assist in rolling by applying pressure to the laminate being conveyed, and may assist in conveying the laminate.

After passing through the rolling part, the laminate can be expected to have a good bonding force between the sheet and the carrier film of the laminate without the need for additional adhesives.

The manufacturing apparatus for the composite film 1000 may comprise auxiliary rollers (not shown) or other components to assist in transporting the carrier film between the first feeding part 21 and the rolling part.

The manufacturing apparatus for the composite film 1000 may comprise a measuring device (not shown) for measuring the thickness of the laminate being conveyed between the rolling part and the end roller 81.

The manufacturing apparatus for the composite film 1000 may further comprise a second feeding part (not shown) for supplying a protective film to the laminate being conveyed between the rolling part and the end roller 81.

The protective film is the same as the protective film described in the method for manufacturing a composite film above, so duplicate descriptions will be omitted.

The manufacturing apparatus for the composite film 1000 may further comprise a second feeding part roller (not shown) for applying and conveying the protective film supplied from the second feeding part to the laminate.

The manufacturing apparatus for the composite film 1000 may further comprise a trimming part (not shown) for trimming the width of the laminate being transported between the rolling part and the end roller 81.

The end roller 81 may finally wind the laminates to provide a composite film.

### Composite Film

To accomplish the above objectives, a composite film according to an embodiment, comprises
a sheet comprising a polyether block amide copolymer; and
a carrier film disposed on the sheet; and
wherein the composite film may maintain adhesion not to occur the delamination after 200,000 cycles of dynamic bending tests at a temperature of -40°C, with a radius of curvature of 1.5 mm and 1 cycle per second, in accordance with IEC 62715-6-1 standards.

The polyether block amide copolymer of the composite film is the same as described previously in the method for manufacturing a composite film, so redundant descriptions will be omitted.

The sheet, carrier film related thickness, and roughness of the composite film are the same as those described in the previous method for manufacturing a composite film, so the redundant description is omitted.

The composite film may have the carrier film disposed on one side of the sheet, and a separate protective film may be further disposed on the other side, which is the opposite side of the sheet.

The composite film may have a haze of 1.48% or less, 1.3% or less, 1.2% or less, or 1.1% or less, as measured by a haze measuring device as described in the experimental examples below. The composite film may have a haze of 0.01% or more. By having such a haze value, the composite film may be suitably applied as a film for display or the like.

The composite film may not delaminate after 200,000 cycles of dynamic bending tests at a bending curvature radius of 1.5 mm and a bending rate of 1 cycle per second at a temperature of -40 °C, according to IEC 62715-6-1. Furthermore, the composite film may not delaminate after the above dynamic bending test at a temperature of 20°C and a temperature of 80°C. By satisfying these characteristics, when the film applied for foldable displays may maintain stable physical properties and appearance even after repeated bending under various climatic conditions.

The sheet of the composite film may have -40ES, which is a storage modulus at a temperature of -40 °C, of 120 MPa or more and 600 MPa or less, or 150 MPa or more and 400 MPa or less.

The sheet of the composite film may have 20ES, which is a storage modulus at a temperature of 20 °C, of 10 MPa or more and 300 MPa or less, or 30 MPa or more and 270 MPa or less.

The sheet of the composite film may have 80ES, which is a storage modulus at a temperature of 80 °C, of 5 MPa or more and 100 MPa or less, or 10 MPa or more and 90 MPa or less.

The composite film may have 20ES/20EC, which is a storage modulus ratio at a temperature of 20 °C of the sheet and the carrier film of the composite film, of 0.3 or more and 4 or less, or 0.5 or more and 3 or less.

Hereinafter, the present invention will be more particularly described with reference to specific embodiments. The following embodiments are illustrative only to aid in understanding the invention and are not intended to limit the scope of the invention.

### Example 1 - Manufacturing of composite film 1

A storage part 12 in which raw materials are stored; an extrusion part 11 comprising an inner space connected to the storage part and in which melting of raw materials obtained from the storage part takes place, and an outlet connected to the inner space and in which the raw materials are extruded into sheets; a rolling part for rolling sheets extruded from the extrusion part; a manufacturing apparatus for a composite film 1000 comprising: a first feeding part 21 for feeding a carrier film to the rolling part, the rolling part rolling the sheet and the carrier film to form a laminate, and an end roller 81 for finally winding the laminate.

Pebax^{®} Rnew^{®} 35R53 resin from ARKEMA FRANCE was used as the raw material for the storage part 12, and SKC's transparent polyimide-based film was used as the carrier film.

The rolling part was arranged so that the sheet being extruded from the extruder is rolled in contact with the carrier sheet within 10 seconds.

With the manufacturing apparatus, a laminate, a composite film, was prepared in which an extruded sheet of the raw material was abutted with the carrier film without any adhesive material. The thickness of the composite film was 50 µm.

### Example 2 - Manufacturing of composite film 2

In Example 1 above, the raw material was changed to Pebax^{®} Rnew^{®} 40R53 from ARKEM FRANCE, and the other conditions were kept the same to prepare the composite film.

### Comparison Example 1

A composite film was prepared by applying a sheet made of Pebax^{®} Rnew^{®} 40R53 resin from ARKEM FRANCE, a commercially available Optically Clear Adhesive Film from SKC High Tech & Marketing formed on the sheet, and a transparent polyimide-based film from SKC on the adhesive layer. The thickness of the film was 60 µm.

### Comparison Example 2

In Example 1 above, the film was prepared by changing the raw material to polyurethane from Rubrizol, with all other conditions maintaining the same.

### Example - Haze Measurement

Some samples of the films prepared in the above examples and comparative examples were cut, and the haze (%) was measured using a SEP-H Hazemeter from Nihon Semitsu Kogaku, and the results were shown in Table 1.

### Example - Dynamic Bending Test

The films prepared in the above examples and comparative examples were subjected to dynamic bending test in accordance with IEC 62715-6-1. At each temperature condition of - 40 °C, 20 °C, and 80 °C, the films were evaluated for delamination after 200,000 cycles of bending tests at a bending radius of 1.5 mm and a bending speed of 1 s/cycle, and the results were shown in Table 1.

**[Table 1]**

| reference | Example 1 | Example 2 | Comparison Example 1 | Comparison Example 2 |
|---|---|---|---|---|
| Raw materials | Polyether block amide copolymer (35R53) | Polyether block amide copolymer (40R53) | Polyether block amide copolymer (40R53) | Polyurethane |
| Bonding Methods | Laminating directly after extrusion (within | Laminating directly after extrusion (within | Applying adhesive layer for optics, | Laminating directly after extrusion (within |

| | 10 seconds) | 10 seconds) | separately | 10 seconds) |
|---|---|---|---|---|
| Haze (%) | 1.0 | 1.0 | 1.5 | 1.5 |
| Dynamic Bending Evaluation at - 40 °C | Good | Good | Delaminating | Delaminating |
| Dynamic Bending Evaluation at 20 °C | Good | Good | Good | Delaminating |
| Dynamic Bending Evaluation at 80 °C | Good | Good | Delaminating | Delaminating |

Referring to Table 1, embodiments with a polyether block amide copolymer resin as the raw material and laminated with a carrier film immediately after extrusion of the raw material showed low haze values and good dynamic bending evaluation results at various temperature conditions.

According to an embodiment of the composite film manufacturing method and manufacturing apparatus, a composite film having good bending-related properties and low haze value may be provided without a separate adhesive material by contacting the carrier film immediately after extrusion of the raw material.

The composite film according to an embodiment has excellent bonding properties without the need for a separate adhesive material between the sheet and the carrier film and may substantially suppress the occurrence of inappropriate phenomena such as interlayer delamination, especially in the case of repeated bending under severe conditions.

Although the preferred embodiments of the present invention have been described in detail above, the scope of the invention is not limited thereto, and various modifications and improvements by those skilled in the art utilizing the basic concepts of the invention as defined in the following claims are also within the scope of the invention.

## Claims

1. A method for manufacturing a composite film, comprising
a laminating operation of extruding a raw material comprising a polyether block amide copolymer into a sheet, and laminating the sheet with a carrier film to obtain a laminate; and
a winding operation of winding the laminates and producing a composite film comprising the laminates,
wherein the laminating operation brings the sheet into contact with the carrier film within 30 seconds of the start of the extrusion, and
wherein the composite film maintains adhesion not to occur the delamination after 200,000 cycles of dynamic bending tests at a temperature of -40°C, with a curvature radius of 1.5 mm and a bending speed of 1 second per 1 time, in accordance with IEC 62715-6-1 standards.

2. The method of claim 1,
wherein the carrier film comprises a polyimide-based resin.

3. The method of claim 1,
wherein the laminating operation comprises a rolling process in which the laminate is passed between a plurality of rollers.

4. The method of claim 1, further comprising
a protective operation of disposing a protective film on the laminate after the laminating operation.

5. The method of claim 3,
wherein the laminating operation comprises a process for the sheet of being extruded and being conveyed or dropped in a direction toward the ground and proceeding to abut on the carrier film.

6. A composite film comprising
a sheet comprising a polyether block amide copolymer; and
a carrier film disposed on the sheet; and
wherein the composite film maintain adhesion not to occur the delamination after 200,000 cycles of dynamic bending tests at a temperature of -40°C, with a curvature radius of 1.5 mm and a bending speed of 1 second per 1 time, in accordance with IEC 62715-6-1 standards.

7. The composite film of claim 6,
wherein one side of the sheet and one side of the carrier film are in direct contact with each other.

8. The composite film of claim 6,
wherein the carrier film is a film comprising a polyimide-based resin.

9. The composite film of claim 6,
wherein the thickness of the sheet is 20 µm or more and 500 µm or less, and
wherein the thickness of the carrier film is 20 µm or more and 1000 µm or less.

10. The composite film of claim 8,
wherein the polyether block amide copolymer comprises at least 10% by weight of amide blocks relative to the total, and an imidization rate of the polyimide-based resin is 90% or more.
